# FASCICULE DE BREVET EUROPEEN

(11) **EP 4 417 955 B1**
(45) Date de publication et mention de la délivrance du brevet: **01.04.2026**
(21) Numéro de dépôt: 24156499.6
(22) Date de dépôt: 08.02.2024
(51) Int. Cl.: G01L 15/00, G01M 15/14, G01M 9/06

(54) **RÂTEAU DE MESURE DE PRESSION AMÉLIORANT LE SUIVI DE PHÉNOMÈNES AÉRODYNAMIQUES INSTATIONNAIRES**
DRUCKMESSRECHEN MIT VERBESSERTER VERFOLGUNG VON INSTATIONÄREN AERODYNAMISCHEN PHÄNOMENEN
PRESSURE MEASURING RAKE IMPROVING THE TRACKING OF NON-STATIONARY AERODYNAMIC PHENOMENA

(30) Priorité: 17.02.2023 FR 2301499
(43) Date de publication de la demande: 21.08.2024
(73) Titulaire: AIRBUS OPERATIONS (S.A.S.), 31060 Toulouse (FR)
(72) Inventeur: DAJEAN, Cyrille, 31060 TOULOUSE Cedex 9 (FR); DUPE, Nicolas, 31060 TOULOUSE Cedex 9 (FR); JEAN, Nicolas, 31060 TOULOUSE Cedex 9 (FR); KELLER, Maxime, 31060 TOULOUSE Cedex 9 (FR)
(74) Mandataire: Airbus-OPS SAS

(56) Documents cités:
- WO-A1-2018/081559
- WO-A1-2022/123143
- FR-A1- 3 090 102

## Description

### Domaine technique

La présente invention concerne un râteau de mesure de pression améliorant le suivi de phénomènes aérodynamiques instationnaires.

### État de la technique

Lors de certaines phases de conception ou de maintenance d'un aéronef, les moteurs dudit aéronef, notamment des turboréacteurs, doivent être testés. Ces tests nécessitent des prises de mesures, au sol et/ou en vol, en différents endroits du moteur que l'on souhaite tester. Ces prises de mesures impliquent une instrumentation du moteur, en particulier au niveau de l'intérieur de la veine secondaire. Pour cela, on connaît des outils de mesure prévus pour être installés dans un moteur à tester, notamment pour mesurer des pressions, tels que décrit dans le document FR 3 090 102.

Ces outils de mesures peuvent comprendre des capteurs de pression de type microsystème électromécanique ou MEMS (« Micro-electromechanical system » en anglais) aptes à générer des données représentatives de mesure de pression. Il existe des capteurs de pression stationnaires et des capteurs de pression instationnaires.

Les phénomènes généralement étudiés à partir des mesures de pression correspondent à des phénomènes aérodynamiques instationnaires présentant des variations à 100 Hz environ. Or, les capteurs de type MEMS présentent des taux d'échantillonnage inférieurs à ces variations pour des capteurs de pression stationnaires ou bien supérieurs à ces variations pour des capteurs de pression instationnaires. Ainsi, les capteurs de pression stationnaires génèrent des données qui ne peuvent pas suivre toutes ces variations. Les capteurs de pression instationnaires peuvent générer des données incorrectes pour des pressions stationnaires, notamment lors de variations subites de température.

Les outils de mesure actuels ne sont donc pas pleinement satisfaisants.

### Exposé de l'invention

La présente invention a pour objet de remédier aux inconvénients des outils de mesure de l'art antérieur. Pour cela, elle concerne un râteau de mesure de pression destiné à être agencé sur une bielle située en travers d'une veine d'un moteur d'un aéronef.

Selon l'invention, le râteau de mesure comporte au moins :
- un fourreau comprenant deux parois latérales délimitant, entre elles, un logement destiné à recevoir la bielle,
- un bord d'attaque s'étendant sur toute une longueur du fourreau, le bord d'attaque présentant une pluralité de cavités réparties sur une longueur du bord d'attaque, chacune des cavités étant séparée hermétiquement l'une par rapport à l'autre,
- pour chacune des cavités, une prise d'air formant un passage fluidique entre la cavité et la veine,
- dans chacune des cavités, un capteur de pression stationnaire configuré pour générer des premières données représentatives de premières mesures de pression stationnaire et un capteur de pression instationnaire configuré pour générer des deuxièmes données représentatives de deuxièmes mesures de pression instationnaire,
- un circuit électronique courant sur au moins une partie de la longueur du fourreau entre le fourreau et le bord d'attaque, le circuit électronique comprenant le capteur de pression stationnaire et le capteur de pression instationnaire de chacune des cavités,
- une unité de traitement comportant un premier module de communication configuré pour recevoir les premières données et les deuxièmes données, un module de fusion configuré pour fusionner les premières données et les deuxièmes données et un deuxième module de communication pour transmettre à un dispositif utilisateur les premières données et les deuxièmes données ainsi que les premières données et les deuxièmes données fusionnées.

Ainsi, grâce à la fusion de données générées à la fois par des capteurs stationnaires et des capteurs instationnaires, il est possible de suivre les variations de phénomènes aérodynamiques instationnaires dans une veine de moteur d'aéronef.

Selon un mode de réalisation, le module de fusion fusionne les premières données et les deuxièmes données à l'aide d'un filtre croisé ajustable.

Par exemple, le filtre croisé ajustable correspond à un filtre de Kalman.

En outre, le capteur de pression stationnaire de chacune des cavités correspond à un capteur de type microsystème électromécanique.

De plus, le capteur de pression instationnaire de chacune des cavités correspond à un capteur de type microsystème électromécanique.

Avantageusement, les cavités sont séparées l'une par rapport à l'autre d'une distance comprise entre 10 mm et 100 mm.

L'invention concerne également un moteur d'un aéronef, ledit moteur comportant une veine et au moins une porte d'inversion mobile, ladite porte d'inversion comprenant au moins une bielle fixée articulée entre la porte d'inversion et une motorisation, ladite bielle étant configurée pour permettre d'amener la porte d'inversion dans une position escamotée dans laquelle elle n'est pas en travers de la veine et dans une position déployée dans laquelle est en travers de la veine. Selon l'invention, le moteur comporte au moins un râteau de mesure tel que spécifié ci-dessus, agencé sur au moins une bielle du moteur, la ou les bielles étant chacune logée dans le logement d'au moins un râteau de mesure.

L'invention concerne également un aéronef comportant au moins un moteur tel que spécifié ci-dessus.

### Brève description des figures

Les figures annexées feront bien comprendre comment l'invention peut être réalisée. Sur ces figures, des références identiques désignent des éléments semblables.
La figure 1 représente le râteau de mesure monté sur une bielle.
La figure 2 représente schématiquement le circuit électronique comportant les capteurs de pression instationnaires et les capteurs de pression stationnaires, ainsi que l'unité de traitement.
La figure 3 représente un aéronef comportant un moteur présentant un râteau de mesure monté sur une bielle.
La figure 4 représente schématiquement un turbo réacteur double flux comportant une porte d'inversion dans une position escamotée.
La figure 5 représente schématiquement un turbo réacteur double flux comportant une porte d'inversion dans une position déployée.
La figure 6 représente en perspective l'unité de traitement connectée au circuit électronique.
La figure 7 montre un graphe représentant des résultats de mesure de pression en fonction du temps lors d'un test en laboratoire sous une pression ambiante constante.
La figure 8 montre un graphe représentant des résultats de mesure de pression en fonction du temps lors d'un test en laboratoire sous une pression présentant de faibles variations de l'ordre de 20 Hz.
La figure 9 montre un graphe représentant des résultats de mesure de pression en fonction du temps lors d'un test en laboratoire sous une pression présentant un échelon caractéristique d'une décompression explosive d'un milieu fermé.
La figure 10 représente une coupe transversale du râteau de mesure.

### Description détaillée

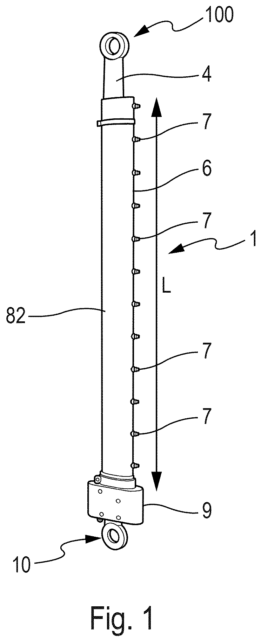

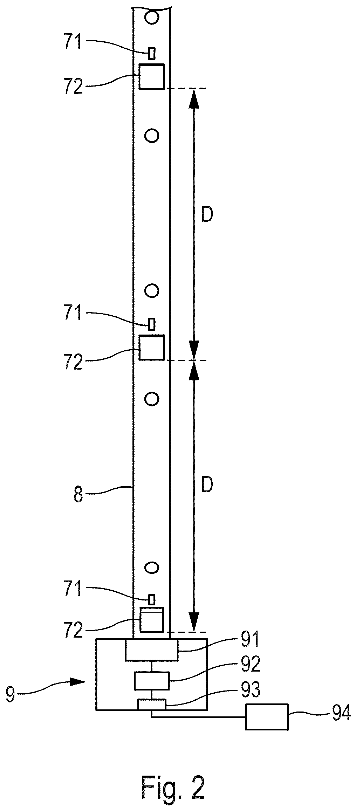

Le râteau de mesure 1 est représenté schématiquement sur la figure 1 et la figure 2.

Le râteau de mesure 1 est prévu pour être fixé à une bielle 4 disposée en travers d'une veine 5 (autrement appelée « veine secondaire 5 ») d'un moteur 3 d'aéronef AC.

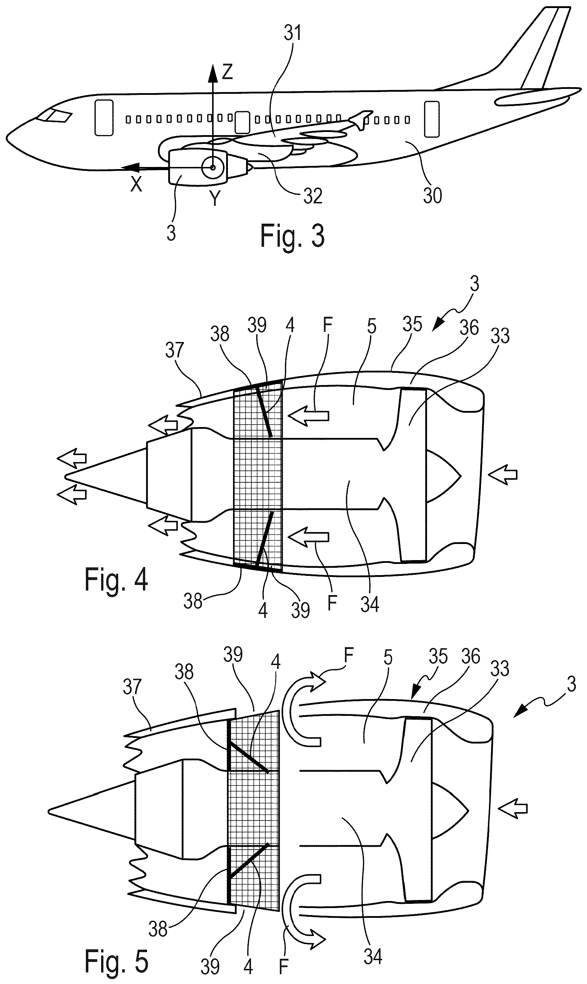

La figure 3 montre un aéronef AC qui comporte un fuselage 30 de chaque côté duquel est fixée une aile 31 qui porte un moteur 3 et un mât 32 qui assure la fixation du moteur 3 sous l'aile 31. Dans la description qui suit, le moteur 3 correspond plus particulièrement à un turboréacteur double flux 3 et d'une veine 5 d'un tel turboréacteur double flux 3 mais il peut correspondre à tout moteur comportant une veine dans laquelle la pression d'un flux F d'air doit être mesurée.

Dans la description qui suit, on appelle X l'axe longitudinal du moteur 3 qui est parallèle à l'axe longitudinal de l'aéronef AC et orienté positivement vers l'avant de l'aéronef AC. On appelle Y l'axe transversal qui est horizontal quand l'aéronef AC est au sol. On appelle Z l'axe vertical lorsque l'aéronef AC est au sol. Les trois axes X, Y et Z sont orthogonaux entre eux.

La figure 4 et la figure 5 montrent un exemple d'un turboréacteur double flux 3. Le turbo réacteur double flux 3 comprend une soufflante 33, une motorisation 34 formant un noyau et une nacelle 35 disposée autour de la motorisation 34. La motorisation 34 est placée en aval de la soufflante 33. Une veine 5 est délimitée entre la motorisation 34 et la nacelle 35. L'air qui pénètre par la soufflante 33 est divisé en un flux primaire qui traverse la motorisation 34 et un flux secondaire qui traverse la veine 5. La nacelle 35 comporte autour de la soufflante 33, un carter de soufflante 36 qui est fixe et des capots mobiles 37 qui sont à l'arrière du carter de soufflante 36 et où chacun est mobile en translation selon une direction de translation globalement parallèle à l'axe longitudinal X du turboréacteur double flux 3.

Chaque capot mobile 37 est mobile en translation par rapport à la motorisation 34 entre une position avancée (figure 4) et une position reculée (figure 5). En position avancée (figure 4), les capots mobiles 37 sont accolés à l'arrière du carter de soufflante 36. En position reculée, les capots mobiles 37 sont reculés par rapport au carter de soufflante 36 et à distance du carter de soufflante 36 pour ouvrir une fenêtre 39 entre la veine 5 et l'extérieur de la nacelle 35. La fenêtre 39 est délimitée à l'avant par le carter de soufflante 36 et à l'arrière par les capots mobiles 37.

Le déplacement de chaque capot mobile 37 est assuré par tous moyens appropriés comme des glissières, des vérins, etc.

Le turboréacteur double flux 3 comporte également un système d'inversion de poussée qui comporte au moins une porte d'inversion 38.

Chaque porte d'inversion 38 est mobile entre une position escamotée (figure 4) et une position déployée (figure 5). En position escamotée (figure 4), la porte d'inversion 38 n'est pas en travers de la veine 5 et ne fait donc pas obstacle au passage du flux secondaire d'air F dans la veine 5. En position déployée (figure 5), la porte d'inversion 38 est en travers de la veine 5 de manière à dévier le flux d'air F vers la fenêtre 39 qui s'ouvre entre la veine 5 et l'extérieur de la nacelle 35.

Pour chaque porte d'inversion 38, le système d'inversion comporte également une bielle 4 qui déplace la porte d'inversion 38 de la position escamotée à la position déployée lorsque le capot mobile 37 passe de la position avancée à la position reculée. La bielle 4 est fixée articulée entre la porte d'inversion 38 et la motorisation 34.

En position escamotée (figure 4), chaque bielle 4 est en travers de la veine 5. En position déployée (figure 5), chaque bielle 4 se trouve pratiquement plaquée contre la motorisation 34.

La figure 1 montre la bielle 4 avec un point d'articulation 10, 100 à chaque extrémité et recouvert d'un râteau de mesure 1 (de pression). Le râteau de mesure 1 est plus particulièrement conçu pour mesurer les pressions lorsque la porte d'inversion 38 est en position escamotée (figure 4).

La bielle 4 présente une section aérodynamique autour de laquelle s'écoule l'air de la veine 5.

Le râteau de mesure 1 comporte un fourreau 82 comportant deux parois latérales 821, 822 entre lesquelles est délimité un logement 823 dans lequel la bielle 4 est destinée à être reçue. Le logement 823 communique avec l'extérieur du fourreau 82 par une ouverture 824 qui s'étend sur au moins une partie de la longueur L du fourreau 82 entre les deux parois latérales 821, 822. La bielle 4 est destinée à être insérée dans le logement 823 par l'ouverture 824.

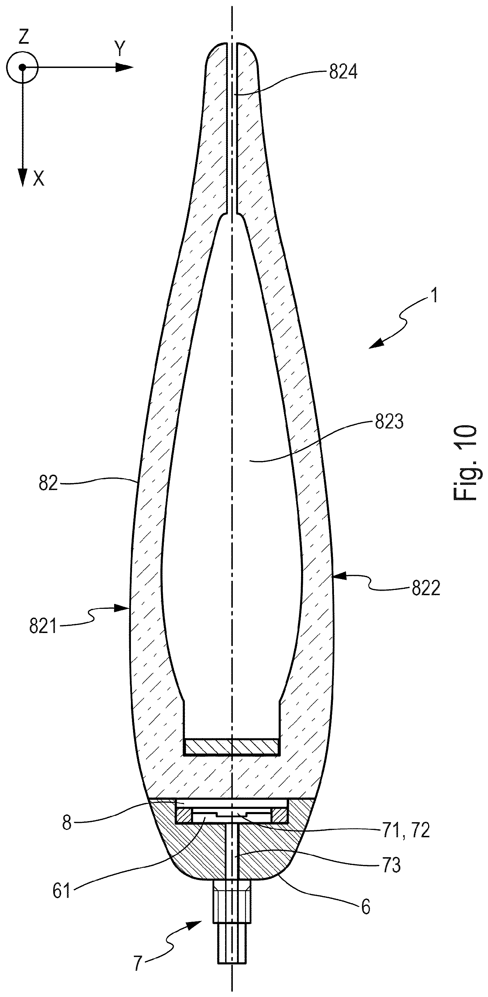

Le râteau de mesure 1 comporte en outre un bord d'attaque 6 s'étendant sur toute une longueur L du fourreau 82 (figure 1 et figure 10). Le bord d'attaque 6 peut correspondre à une pièce rapportée sur le fourreau 82. Le bord d'attaque 6 peut aussi faire partie intégrante du fourreau 82.

Le bord d'attaque 6 présente une pluralité de cavités 61 réparties sur une longueur L du bord d'attaque 6. Chacune des cavités 61 est isolée hermétiquement d'une autre cavité 61.

Pour chacune des cavités 61, le râteau de mesure 1 comporte une prise d'air 7 qui forme un passage fluidique 73 entre la cavité 61 et la veine 5. Chaque prise d'air 7 du bord d'attaque 6 communique de façon exclusive avec une cavité 61.

Dans chacune des cavités 61, le râteau de mesure 1 comprend un capteur de pression stationnaire 71 configuré pour générer des premières données représentatives de premières mesures de pression stationnaire et un capteur de pression instationnaire 72 configuré pour générer des deuxièmes données représentatives de deuxièmes mesures de pression instationnaire.

Le capteur de pression stationnaire 71 peut présenter un taux d'échantillonnage allant jusqu'à 128 points de mesure par seconde, une bande passante allant jusqu'à 40 Hz. Il ne présente pas de filtre anticrénelage.

Le capteur de pression instationnaire 72 peut présenter un taux d'échantillonnage allant jusqu'à 4096 points de mesure par seconde, une bande passante allant jusqu'à 800 Hz. Il présente un filtre anticrénelage.

Le râteau de mesure 1 comprend en outre un circuit électronique 8 qui court sur la longueur L du fourreau 82, entre le fourreau 82 et le bord d'attaque 6 Le circuit électronique 8 comprend le capteur de pression stationnaire 71 et le capteur de pression instationnaire 72 de chacune des cavités 61.

Le râteau de mesure 1 comprend également une unité de traitement de données 9 (figure 1, figure 2, figure 6). L'unité de traitement de données 9 comporte un premier module de communication 91 configuré pour recevoir les premières données et les deuxièmes données et un module de fusion 92 configuré pour fusionner les premières données et les deuxièmes données.

La fusion des données d'un capteur stationnaire 71 et d'un capteur instationnaire 72 permet de pouvoir suivre les variations de phénomènes aérodynamiques instationnaires dans une veine de moteur d'aéronef. L'utilisation de capteurs stationnaires seulement ou de capteurs instationnaires seulement n'aurait pas permis de suivre ces variations de façon satisfaisante.

Le râteau de mesure comprend également un deuxième module de communication 93 configuré pour transmettre à un dispositif utilisateur 94 les premières données, les deuxièmes données ainsi que les premières données et les deuxièmes données fusionnées. Par exemple, les premières données, les deuxièmes données ainsi que les premières données et les deuxièmes données fusionnées peuvent être transmises au dispositif utilisateur 94 par l'intermédiaire d'une unité de chargement quand l'unité de traitement de données 9 est connecté de façon amovible à l'unité de chargement.

À titre d'exemple non limitatif, le dispositif utilisateur 94 peut correspondre à un dispositif d'affichage.

Le module de fusion 92 peut fusionner les premières données et les deuxièmes données à l'aide d'un filtre croisé ajustable.

À titre d'exemple non limitatif, le filtre croisé ajustable correspond à un filtre de Kalman.

Le capteur de pression stationnaire 71 de chacune des cavités 61 correspond à un capteur de type microsystème électromécanique.

Le capteur de pression instationnaire 72 de chacune des cavités 61 correspond à un capteur de type microsystème électromécanique.

Avantageusement, les cavités 61 sont séparées l'une par rapport à l'autre d'une distance D comprise entre 10 mm et 100 mm, notamment entre 40 mm et 60 mm, de préférence 50 mm.

Selon les applications et/ou la précision de mesure que l'on souhaite obtenir, la distance D peut varier.

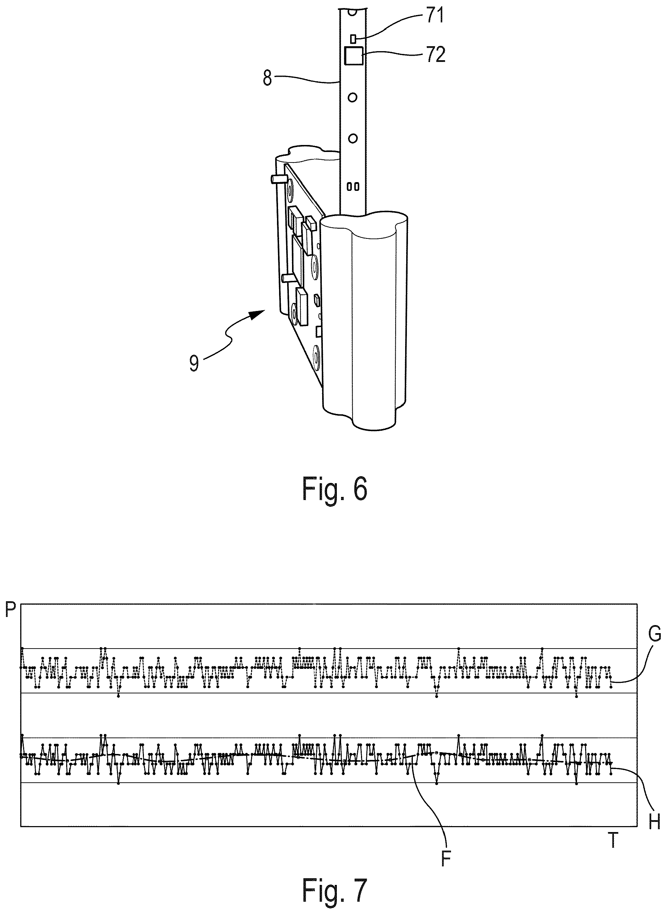

La figure 7, la figure 8 et la figure 9 montrent chacune un graphe représentant des résultats de mesure de pression P (axe des ordonnées) en fonction du temps T (axe des abscisses) lors de tests en laboratoire sous différentes conditions. La courbe F correspond aux données de mesure de pression stationnaire générées par le capteur de pression stationnaire 71. La courbe G correspond aux données de mesure de pression instationnaire générées par le capteur de pression instationnaire 72. La courbe H correspond au résultat de la fusion des données de mesure de pression stationnaire et des données de mesure de pression instationnaire.

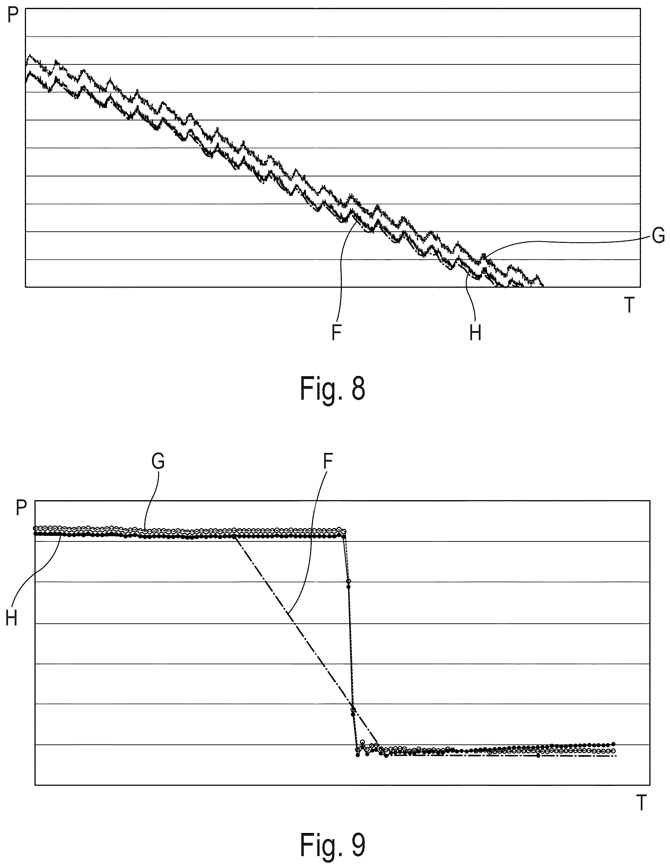

La figure 7 représente les résultats d'un test en laboratoire sous une pression ambiante constante. La figure 8 représente les résultats d'un test en laboratoire sous une pression présentant de faibles variations de l'ordre de 20 Hz. La figure 9 représente les résultats d'un test en laboratoire sous une pression présentant un échelon caractéristique d'une décompression explosive d'un milieu fermé.

## Revendications

1. Râteau de mesure de pression destiné à être agencé sur une bielle (4) située en travers d'une veine (5) d'un moteur (3) d'un aéronef (AC), comporte au moins :
- un fourreau (82) comprenant deux parois latérale (821, 822) délimitant, entre elles, un logement (823) destiné à recevoir la bielle (4),
- un bord d'attaque (6) s'étendant sur toute une longueur (L) du fourreau (82), le bord d'attaque (6) présentant une pluralité de cavités (61) réparties sur une longueur du bord d'attaque (6), chacune des cavités (61) étant séparée hermétiquement l'une par rapport à l'autre,
- pour chacune des cavités (61), une prise d'air (7) formant un passage fluidique (73) entre la cavité (61) et la veine (5), **caractérisé en ce que**
- dans chacune des cavités (61), un capteur de pression stationnaire (71) configuré pour générer des premières données représentatives de premières mesures de pression stationnaire et un capteur de pression instationnaire (72) configuré pour générer des deuxièmes données représentatives de deuxièmes mesures de pression instationnaire,
- un circuit électronique (8) courant sur au moins une partie de la longueur (L) du fourreau (82) entre le fourreau (82) et le bord d'attaque (6), le circuit électronique (8) comprenant le capteur de pression stationnaire (71) et le capteur de pression instationnaire (72) de chacune des cavités (61),
- une unité de traitement (9) comportant un premier module de communication (91) configuré pour recevoir les premières données et les deuxièmes données, un module de fusion (92) configuré pour fusionner les premières données et les deuxièmes données et un deuxième module de communication (93) pour transmettre à un dispositif utilisateur (94), les premières données, les deuxièmes données ainsi que les premières données et les deuxièmes données fusionnées, le module de fusion (92) fusionnant les premières données et les deuxièmes données à l'aide d'un filtre croisé ajustable.

2. Râteau de mesure selon la revendication 1,
**caractérisé en ce que** le filtre croisé ajustable correspond à un filtre de Kalman.

3. Râteau de mesure selon l'une des revendications 1 ou 2,
**caractérisé en ce que** le capteur de pression stationnaire (71) de chacune des cavités (61) correspond à un capteur de type microsystème électromécanique.

4. Râteau de mesure selon l'une des revendication 1 à 3,
**caractérisé en ce que** le capteur de pression instationnaire (72) de chacune des cavités (61) correspond à un capteur de type microsystème électromécanique.

5. Râteau de mesure selon l'une des revendications 1 à 4,
**caractérisé en ce que** les cavités (61) sont séparées l'une par rapport à l'autre d'une distance (D) comprise entre 10 mm et 100 mm.

6. Moteur d'un aéronef, ledit moteur comportant une veine (5) et au moins une porte d'inversion mobile (38), ladite porte d'inversion (38) comprenant au moins une bielle (4) fixée articulée entre la porte d'inversion (38) et une motorisation (34), ladite bielle (4) étant configurée pour permettre d'amener la porte d'inversion (38) dans une position escamotée dans laquelle elle n'est pas en travers de la veine (5) et dans une position déployée dans laquelle est en travers de la veine (5),
**caractérisé en ce qu'**il comporte au moins un râteau de mesure (1) selon l'une quelconque des revendication 1 à 5, agencé sur au moins une bielle (4) du moteur (3), la ou les bielles (4) étant chacune logée dans le logement (823) d'au moins un râteau de mesure (1).

7. Aéronef,
**caractérisé en ce qu'**il comporte au moins un moteur (3) selon la revendication 6.

## Patentansprüche

1. Druckmessrechen, der dazu bestimmt ist, an einer Stange (4) angeordnet zu werden, die quer in einem Strömungskanal (5) eines Triebwerks (3) eines Luftfahrzeugs (AC) gelegen ist,
umfassend mindestens:
- eine Hülse (82), die zwei Seitenwände (821, 822) beinhaltet, die zwischen sich eine Aufnahme (823) begrenzen, die dazu bestimmt ist, die Stange (4) aufzunehmen;
- eine Vorderkante (6), die sich über die gesamte Länge (L) der Hülse (82) erstreckt, wobei die Vorderkante (6) eine Mehrzahl von Hohlräumen (61) aufweist, die über eine Länge der Vorderkante (6) verteilt sind, wobei jeder der Hohlräume (61) von dem anderen hermetisch getrennt ist;
- für jeden der Hohlräume (61) einen Lufteinlass (7), der einen Fluidkanal (73) zwischen dem Hohlraum (61) und dem Strömungskanal (5) bildet, **dadurch gekennzeichnet, dass**
- in jedem der Hohlräume (61) ein stationärer Drucksensor (71) dazu ausgestaltet ist, erste Daten zu erzeugen, die für erste stationäre Druckmessungen repräsentativ sind, und ein nicht stationärer Drucksensor (72) dazu ausgestaltet ist, zweite Daten zu erzeugen, die für zweite nichtstationäre Druckmessungen repräsentativ sind,
- eine elektronische Schaltung (8) über mindestens einen Teil der Länge (L) der Hülse (82) zwischen der Hülse (82) und der Vorderkante (6) verläuft, wobei die elektronische Schaltung (8) den stationären Drucksensor (71) und den nichtstationären Drucksensor (72) jedes der Hohlräume (61) beinhaltet,
- eine Verarbeitungseinheit (9) ein erstes Kommunikationsmodul (91) beinhaltet, das dazu ausgestaltet ist, die ersten Daten und die zweiten Daten zu empfangen, ein Fusionsmodul (92), das dazu ausgestaltet ist, die ersten Daten und die zweiten Daten zu fusionieren, und ein zweites Kommunikationsmodul (93), um die ersten Daten, die zweiten Daten sowie die fusionierten ersten Daten und zweiten Daten an eine Benutzervorrichtung (94) zu übertragen, wobei das Fusionsmodul (92) die ersten und die zweiten Daten mithilfe eines anpassbaren gekreuzten Filters fusioniert.

2. Messrechen nach Anspruch 1,
**dadurch gekennzeichnet, dass** das anpassbare gekreuzte Filter einem Kalman-Filter entspricht.

3. Messrechen nach einem der Ansprüche 1 oder 2,
**dadurch gekennzeichnet, dass** der stationäre Drucksensor (71) jedes der Hohlräume (61) einem Sensor vom Typ mikroelektromechanisches System entspricht.

4. Messrechen nach einem der Ansprüche 1 bis 3,
**dadurch gekennzeichnet, dass** der nichtstationäre Drucksensor (72) jedes der Hohlräume (61) einem Sensor vom Typ mikroelektromechanisches System entspricht.

5. Messrechen nach einem der Ansprüche 1 bis 4,
**dadurch gekennzeichnet, dass** die Hohlräume (61) um einen Abstand (D) zwischen 10 mm und 100 mm voneinander getrennt sind.

6. Triebwerk eines Luftfahrzeugs, wobei das Triebwerk einen Strömungskanal (5) und mindestens eine bewegliche Umkehrklappe (38) umfasst, wobei die Umkehrklappe (38) mindestens eine Stange (4) beinhaltet, die schwenkbar zwischen der Umkehrklappe (38) und einem Antrieb (34) befestigt ist, wobei die Stange (4) dazu ausgestaltet ist, das Führen der Umkehrklappe (38) in eine eingefahrene Stellung, in der sie nicht quer zu dem Strömungskanal (5) liegt, und in eine ausgefahrene Stellung, in der sie quer zu dem Strömungskanal (5) liegt, zu ermöglichen,
**dadurch gekennzeichnet, dass** es mindestens einen Messrechen (1) nach einem der Ansprüche 1 bis 5 umfasst, der an mindestens einer Stange (4) des Triebwerks (3) angeordnet ist, wobei die Stange oder Stangen (4) jeweils in der Aufnahme (823) mindestens eines Messrechens (1) aufgenommen sind.

7. Luftfahrzeug,
**dadurch gekennzeichnet, dass** es mindestens ein Triebwerk (3) nach Anspruch 6 umfasst.

## Claims

1. Pressure measurement bar intended to be arranged on a rod (4) passing through a flow path (5) of an engine (3) of an aircraft (AC),
comprising at least:
- a sheath (82) comprising two side walls (821, 822) which between them delimit a housing (823) intended to receive the rod (4),
- a leading edge (6) extending over an entire length (L) of the sheath (82), the leading edge (6) having a plurality of cavities (61) distributed over a length of the leading edge (6), each of the cavities (61) being hermetically sealed relative to one another,
- for each of the cavities (61), an air intake (7) forming a fluidic passage (73) between the cavity (61) and the flow path (5), **characterized in that**
- in each of the cavities (61), a steady pressure sensor (71) is configured for generating first data representative of first steady pressure measurements, and an unsteady pressure sensor (72) configured for generating second data representative of second unsteady pressure measurements,
- an electronic circuit (8) runs over at least part of the length (L) of the sheath (82) between the sheath (82) and the leading edge (6), the electronic circuit (8) comprising the steady pressure sensor (71) and the unsteady pressure sensor (72) of each of the cavities (61),
- a processing unit (9) comprises a first communication module (91) configured for receiving the first data and the second data, a merging module (92) configured for merging the first data and the second data, and a second communication module (93) for transmitting the first data, the second data and the merged first data and second data to a user device (94), the merging module (92) merging the first data and the second data using an adjustable cross filter.

2. Measurement bar according to Claim 1,
**characterized in that** the adjustable cross filter corresponds to a Kalman filter.

3. Measurement bar according to either of Claims 1 and 2,
**characterized in that** the steady pressure sensor (71) of each of the cavities (61) corresponds to a sensor of the micro-electromechanical system type.

4. Measurement bar according to one of Claims 1 to 3, **characterized in that** the unsteady pressure sensor (72) of each of the cavities (61) corresponds to a sensor of the micro-electromechanical system type.

5. Measurement bar according to one of Claims 1 to 4, **characterized in that** the cavities (61) are separated from one another by a distance (D) between 10 mm and 100 mm.

6. Aircraft engine, said engine comprising a flow path (5) and at least one movable inversion gate (38), said inversion gate (38) comprising at least one rod (4) fixed in articulated fashion between the inversion gate (38) and a motor unit (34), said rod (4) being configured for bringing the inversion gate (38) into a retracted position in which it does not extend through the flow path (5), and a deployed position in which it extends through the flow path (5),
**characterized in that** it comprises at least one measurement bar (1) according to any one of Claims 1 to 5, arranged on at least one rod (4) of the engine (3), the or each rod (4) being housed in the housing (823) of at least one measurement bar (1).

7. Aircraft,
**characterized in that** it comprises at least one engine (3) according to Claim 6.
